# EUROPEAN PATENT SPECIFICATION

(11) **EP 3 276 242 B1**
(45) Date of publication and mention of the grant of the patent: **28.08.2019**
(21) Application number: 16181714.3
(22) Date of filing: 28.07.2016
(51) Int. Cl.: F16L 41/00, F16L 41/03, F16L 39/02, G01L 19/00, F16L 33/30, F16L 25/14

(54) **DIFFERENTIAL PRESSURE SENSOR COMPRISING AN ADAPTOR DEVICE**
DIFFERENZDRUCKSENSOR UMFASSEND EINE ADAPTERVORRICHTUNG
CAPTEUR DE PRESSION DIFFERENTIELLE COMPRENANT UN DISPOSITIF ADAPTETEUR

(43) Date of publication of application: 31.01.2018
(73) Proprietor: Sensirion AG, 8712 Stäfa (CH)
(72) Inventor: MONNIN, Eric, 8712 Stäfa (CH); BOSMA, Andries, 8712 Stäfa (CH); MÜLLER, Marvin, 8712 Stäfa (CH); HORNUNG, Mark, 8712 Stäfa (CH)
(74) Representative: Strässle, Simon

(56) References cited:
- EP-B1- 1 451 417
- WO-A1-2016/090493
- DE-A1- 4 032 562
- US-A1- 2009 194 831
- US-A1- 2013 319 556
- US-A1- 2015 145 240

## Description

### TECHNICAL FIELD

The present invention relates to a differential pressure sensor that comprises an adaptor device for establishing a connection between a further device with hose connectors and at least one hose, the further device being a differential pressure sensor package of the differential pressure sensor.

### PRIOR ART

Some differential pressure sensor devices have two or more coupling nozzles for connecting proximal ends of hoses for the purpose of creating an exclusive fluid communication between the coupling nozzles and distal hose ends. US 2009/0194831 A1 discloses a differential pressure sensor device with two coupling nozzles, wherein a housing is configured to directly connect to a printed circuit board assembly and a pressure die is mounted on the printed circuit board assembly. The hoses - *e*.*g*. hoses from silicone or rubber - are often consumer goods and have a predetermined cross-section and material thickness. Hose material and material thickness may generally be optimized to the specific purpose of the device they are connected to. It may also be that a specific hose type shall be used as it is easily available. In order to ensure connectivity, the hose thickness has, however, to fulfill the following requirement: It shall be less than half of the distance between the two neighboring coupling nozzles to be connected; else the hoses do not fit both on the same device at the same time. Accordingly, either a specific device geometry is necessary for a given hose type or a specific hose type is necessary for a given device geometry.

US 2013/0319556 A1 discloses inter alia, a bypass manifold for a water treatment system. The bypass manifold may have inlets and outlets that are differently spaced.

US 2015/0145240 A1 discloses, inter alia, a thermal relief valve assembly having two inlet ports and two outlet ports, the inlet ports and outlet ports being differently spaced.

DE 40 32 562 A1 discloses a distribution arrangement for distributing fluid media.

EP 1 451 417 B1 discloses a waste removal system with different outlet nozzle arrangements.

WO 2016/090493 A1 discloses a flow splitter comprising a plurality of passages through a one-piece body.

### SUMMARY OF THE INVENTION

Accordingly, it is an object of the present invention to overcome the above stated disadvantages and to provide a technical solution such that the same device with a given coupling nozzle arrangement is connectable to an increased number of types of hoses.

This problem is solved by a differential pressure sensor according to claim 1.

The present invention provides a differential pressure sensor comprising a differential pressure sensor package comprising a first hose coupling nozzle and a second hose coupling nozzle, the differential pressure sensor further comprising an adaptor device comprising a base body. The base body itself provides a first reception for receiving the first hose coupling nozzle and a second reception for receiving the second hose coupling nozzle.

The first and second receptions are spaced apart from one another by a first distance.

The adaptor device further comprises a first connecting nipple for receiving a first hose, i.e. a hose portion may be pushed thereon. The first connecting nipple has, at its distal end (i.e. away from the base body), a first muzzle opening. Moreover, the first connecting nipple is attached to the base body and connected to the first reception by a first passage such as to establish a continuous channel from the respective reception to the respective muzzle opening.

The adaptor device further comprises a second connecting nipple for receiving a second hose. The second connecting nipple has, at its distal end, a second muzzle opening and is attached to the base body and connected to the second reception by a second passage.

The first and second passages are continuous and fluidly connect the first and second muzzle openings to the first and second receptions, respectively. Moreover, the first and second muzzle openings are spaced apart at a second distance.

The adaptor device is configured to be connected to the differential pressure sensor package, in particular to a (printed) circuit board of the differential pressure sensor package, The adaptor device can be actually attached to the differential pressure sensor package. The coupling nozzles can be the pneumatic connectors of the differential pressure sensor package. In the following, the differential pressure sensor package will also be referred to as the "further device".

The adaptor device is configured to receive, upon connection with the further device, the first and second hose coupling nozzles in the first and second receptions, respectively, preferably in a fluid-tight manner. In order to easily accommodate hoses of different material thickness, the second distance now longer than the first distance.

In some embodiments, the second distance is at least 30% longer, more preferably at least 50% longer, more preferably at least 100% or at least 200% longer, most preferably at least 5-times to 7-times longer than the first distance.

In some embodiments the first distance is smaller than 15 millimeters, preferably smaller than 10 millimeters, most preferably less than or equal to 5 millimeters.

In the context of the present invention, the term *"adaptor device"* refers to a coupling structure - preferably a single-piece unit, *e.g.* a molded piece - that may be arranged over the further device, whilst receiving the first and second coupling nozzle in the first and second receptions, respectively, such that the fluid outlet of the coupling nozzles is connected to the muzzle openings of the connecting nipples. In other words: The adaptor device is an extension structure that enlarges the distance of the ports to be connected to a hose such that thicker hoses or hoses with thicker material may be used.

It is to be understood that an exterior diameter of the connecting nipple may also be change, e.g. increased such that hoses with thicker inner diameters may be used.

In the context of the present invention, the term *"base body"* refers to the frame structure that accommodates the receptions and the connecting nipples and allows for connecting the adaptor device to the further device in a direct or indirect manner.

In the context of the present invention, the term *"reception"* refers to a receiving structure that is configured to receive the coupling nozzle and preferably allows for a substantially fluid-tight connection between coupling nozzle and the respective first or second passage. Preferably, the receptions are cavities that are at least partly or completely circumferentially limited by wall structures, the wall structures providing lateral abutment to the received coupling nozzle such that as to stabilize the coupling nozzle in the reception. Sealing elements may be used to tighten the connection.

In the context of the present invention, the terms *"coupling nozzle"* and *"connecting nipple"* refer each to a connector part for receiving a terminal open portion of a hose, the hose being preferably flexible, e.g. made from silicone, rubber, or plastics.

In the context of the present invention, the term "*further device*" refers to a differential pressure sensor package that comprises coupling nozzles that shall be connected to hose-like structures for probing distant fluid conditions. The coupling nozzles can be two pneumatic ports.

The present invention is based on the insight that an adaptor device may be used to increase the distance between the coupling nozzles of a complete sensor package by providing receptions for the coupling nozzles and connecting nipples that are, at least a their muzzle openings, further apart further apart from one another than the coupling nozzles are.

It is to be understood that the basic body may have any shape such as a circular or round disc shape or it may be a convex polytope.

In some preferred embodiments, the basic body has a part or complete cuboidal shape with cuboid faces. Preferably, the first and second connecting nipples are arranged on the same first cuboid face of the cuboid faces, wherein the first and second receptions are arranged on the same second cuboid face of the cuboid faces, the first cuboid face being different from the second cuboid face. The receptions may be arranged on a bottom face while the connecting nipples may be arranged on a lateral face or on the top face of the base body.

In some embodiments, the first and second connecting nipples have first and second longitudinal nipple axes, respectively, wherein the first and second longitudinal nipple axes are straight and extend in an inclined manner with respect to one another. Preferably, the the first and second longitudinal nipple axes form a V shape extending from the base body.

The V shape may have an opening angle that ranges from 10 degrees to 165 degrees, preferably, said opening angle ranges between 45 degrees and 120 degrees, more preferably between 60 degrees and 100 degrees, *e.g.:* 60 degrees or 90 degrees. The opening angle depends on the target second distance which, in turn, depends on the length of the first and second connecting nipples.

The V shape may preferably be symmetrical with respect to the front-back axis of the basic body (see below). It may, however, also be asymmetric, *i.e.* one arm of the V shape may be further bent outwardly than the other. Accordingly, it is also contemplated that one connecting nipple extends normally, *i.e.* perpendicularly, or in plane, *i.e*. parallel, from the face it is attached to, while the other connecting nipple is inclined to said face and the one connecting nipple.

Moreover, in general, lengths of the first and second connecting nipples, respectively, may be the same or may be different from one another, *e.g.* by at least 5%, 10%, 50%, or 100%. Also, a diameter of the first and second connecting nipples may be the same or may be different, *e.g.* by at least 5%, 10%, 50%, or 100%.

The geometry may depend on the specific design of the further device and/or on the purpose of the latter and on the hoses to be used.

In some embodiments, the first and second connecting nipples are not or not entirely straight but are bent and/or have steps along their longitudinal extension. Accordingly, the connecting nipples may have any form between the receptions and the muzzle openings.

In some embodiments, the first and second receptions have, on their depth or on a step along the extension, a sealing element for forming the fluid-tight connection with the first and second hose coupling nozzles. This sealing element may be a sealing ring or piece that may be made from an elastic material and matches the shape of the cross-section of the coupling nozzle.

In some embodiments, the first and second receptions have first and second longitudinal reception axes, respectively, wherein the first and second longitudinal reception axes extend parallel to on another. Preferably, the first and second longitudinal reception axes are straight for receiving straight coupling nozzles. The cross-sectional shape of the receptions may be similar as the cross-sectional shape of the coupling nozzle to be received. Preferably, the cross-sectional shapes of the receptions as well as of the connecting nipples are round, *e.g.* they have the shape of a straight or at least partly bent cylinder.

In some embodiments the first and second longitudinal reception axes span a second plane. The second plane may extend parallel to one of the cuboid faces of the basic body.

In some embodiments, the first and second longitudinal nipple axes span a first plane, wherein the first plane and the second plane intersect one another, wherein an intersection angle between the first plane and the second plane preferably ranges between 45 degrees to 165 degrees; wherein an intersecting line of the first plane and the second plane extends preferably parallel to a connection line of the first and second muzzle openings of the connecting nipples, or parallel the second cuboid face and/or wherein the intersection angle is preferably 120 degrees or smaller, *e.g.* 90 degrees.

In some embodiments, the first and second connecting nipples are provided with an abutment, the abutment having at least one proximal face facing the tip of the connecting nipple and at least one distal face facing the other way. The first and second longitudinal nipple axes preferably intersect with the at least one proximal and distal faces. The abutment provides a stop for a hose that is pushed partially over the connecting nipple.

Preferably, the abutment is elongated in a direction of the second distance, *i.e.* along the connecting line of the first and second muzzle openings. The elongation minimizes a height of the adaptor device whilst ensuring a secure stop surface in the elongation direction.

The abutment may be at least one or several plate-like elements.

In some embodiments, the abutment comprises at least two abutment rings, wherein on each of the first and second connecting nipples is arranged at least one abutment ring. The abutment ring then at least partially or completely circumferentially surrounds the connecting nipple. The outer shape of the abutment rings may be at least in part or completely round, preferably circular or elliptical, or have a polygonal shape.

In some embodiments, the proximal and distal faces of the abutment extend parallel to one of the cuboid faces of the basic body. Alternatively, the distal and/or proximal faces of the abutment extend perpendicularly to the longitudinal extension of the connecting nipple.

Moreover, the proximal face may be arranged at a distance to the one of the cuboid faces. Thereby, a gap is formed between said cuboid face and the proximal face of the abutment, the gap being adapted for receiving portions of a further wall structure. The further wall structure may be the housing of a larger device containing the second device. Thereby, the connecting nipples extend through the further wall structure, and may be engaged from the outside while the adapter device and the further wall structure are engaged in at least a partial positive locking manner, preferably also in an additional force fit.

The base body has a cavity and the first and second receptions are arranged in said cavity. Preferably, a reception structure is additionally arranged in the cavity such as to at least partially surround the first and second receptions. The reception structure preferably delimits a sub-cavity within the cavity, the sub-cavity being shaped for receiving the further device, *e.g*., the differential pressure sensor package with the first and second coupling nozzles, or parts thereof. The sub-cavity may have a substantially cuboidal shape.

In some embodiments, the adapter device further comprises at least one first fastening structure for connecting the adaptor device to the further device, in particular to a circuit board of the further device. Preferably, these fastening structures are quick-release coupling elements for easy and quick connection of the adaptor device with the further device, the latter carrying the second fastening structure.

Preferably, the at least one first fastening structure comprises at least one, preferably a plurality of snap-in tongues with a snap-in nose and/or at least one a through-hole through the basic body for connecting the adaptor device to the further device by means of bolts such as screws or the like. Soldering connections may also be provided through the through-hole. The first fastening structure may, for example, be selected from the group comprising: glue surfaces, bolt connections, screw connections, and hook connections of any kind.

In some embodiments, the first and second connecting nipples each comprise an attachment portion, the attachment portion being a pipe portion extending along the first and second nipple axes, respectively, and being attached to the first cuboid face of the base body. The first and second nipple axes extend preferably parallel to the first cuboid face.

The free tip portions of the connecting nipples may be provided with a retention structure for securely engaging the hose portion. The retention structure may comprise, *e.g.*, at least one rim, ring, or rib, extending at least partially circumferentially around the connecting nipple and extending in radial direction.

In some preferred embodiments, the adaptor device is a single-piece element, preferably a molded piece. Any or some of the edges of the adaptor device may rounded such as to avoid damage to the hose.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a perspective top front view of a preferred embodiment of the adaptor device according to invention;
- Fig. 2: shows the adaptor device according to Fig. 1 in a bottom view;
- Fig. 3: shows the adaptor device according to Fig. 1 in a perspective top rear view;
- Fig. 4: shows, in a top view, a further embodiment of the adaptor device according to invention;
- Fig. 5: shows a perspective top rear view of the embodiment of the adaptor device according to Fig. 4;
- Fig. 6: shows of the perspective bottom front view of the embodiment of the adaptor device according to Fig. 4;
- Fig. 7: shows a further perspective top front view of the embodiment of the adaptor device according to Fig. 4;
- Fig. 8: shows a detail of a cross-sectional view of the adaptor device with an increased detail of Fig. 8 to the left;
- Fig. 9: shows a further detail of a cross-sectional view of the adaptor device; and
- Fig. 10: shows a perspective top view of a conventional differential pressure sensor package.

### DESCRIPTION OF PREFERRED EMBODIMENTS

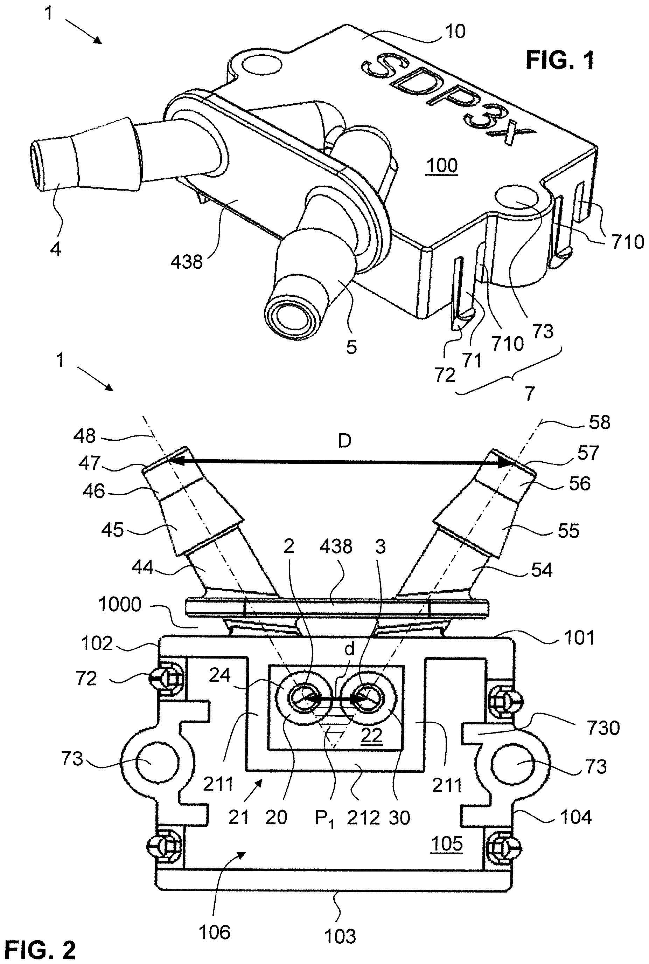

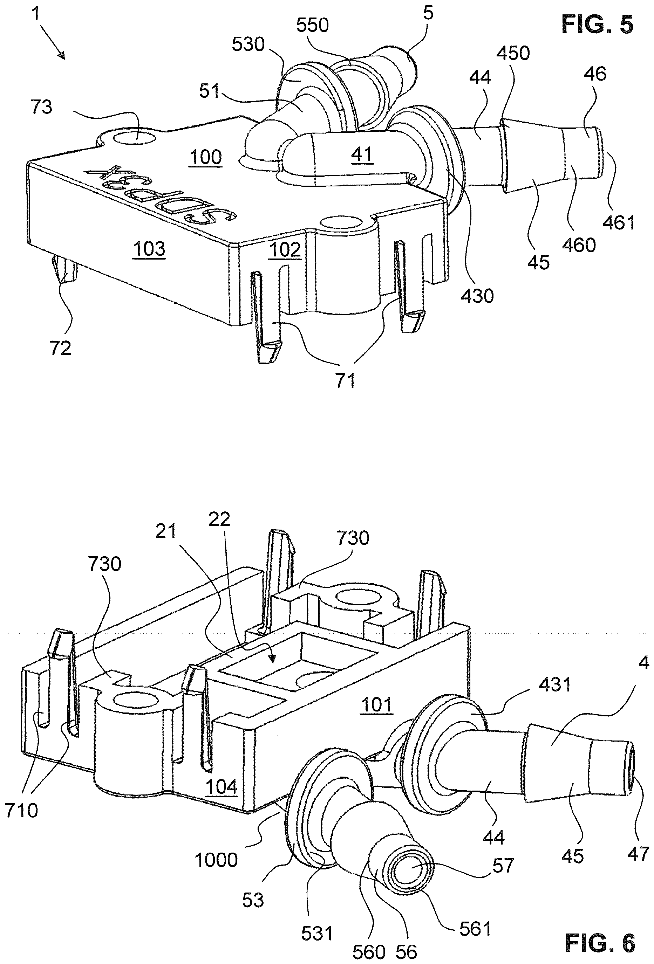

Preferred embodiments are now described with reference to Figures 1 to 10.

**Figures 1** to **3** show a first embodiment of the adaptor device 1 according to invention in a perspective top front view, a bottom view, and a perspective top rear view, respectively.

The adaptor device 1 features a basic body 10 with a cuboidal shape and is sized in the cm range, *e.g.*: 6 cm x 7 cm x 1 cm. The base body 10 includes a top wall with a top face 100, a front wall with a front face 101, two side walls with lateral side faces 102, 104, and a rear wall with a rear face 103. There is no extra bottom wall such that the bottom face 105 is actually the bottom face of the top wall.

The box-like base body 10 delimits a substantially cuboidal bottom cavity 106 which is open toward the bottom (*cf.* Fig. 2).

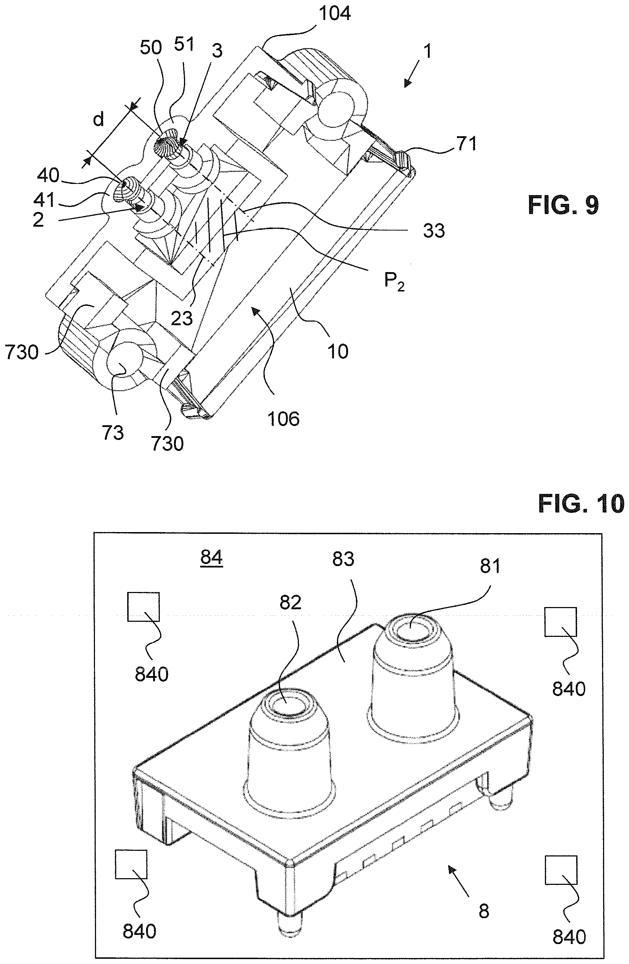

The basic body 10 further comprises first and second receptions 2, 3 for receiving first and second coupling nozzles 81, 82 of a differential pressure sensor package 8 (*cf.* Fig. 10), first and second connecting nipples 4, 5 for establishing a connection with flexible hoses (not shown), and a first fastening structure 7 for connection with a printed circuit board 84 (*cf.* Fig. 10) on which the package 8 is arranged on.

The first and second connecting nipples 4, 5 are single-piece elements that comprise attachment portions 41, 51, first and second intermediate portions 42, 44 and 52, 54 with an abutment 438 arranged therebetween, sealing rings 45, 55, and tip portions 46, 56, respectively. The first and second connecting nipples 4, 5 are mirror images from one another with respect to a mirror plane extending perpendicularly to the second plane P₂ (see below) and at the same time being the bisector plane of the V shape (see below).

The tip portions 46, 56 have rounded distal edges 461, 561 that define muzzle openings 47, 57 of the first and second connecting nipple 4, 5, respectively. The tip portions 46, 56 are designed as straight pipe portions with proximal ends 460, 560.

Proximal of the proximal ends 460, 560 of the tip portions 46, 56 extend the sealing rings 45, 55. The sealing rings 45, 55 are frustroconically shaped and taper in the distal direction. At the proximal end of the sealing rings 45, 55 proximally facing stop surfaces 450, 550 are arranged. Accordingly, the first and second connecting nipples 4, 5 taper at the stop faces 450, 550 in a step-wise manner in the proximal direction. This ensures proper engagement of the adaptor device 1 and the connected hoses.

Further straight pipe portions, the first and second intermediate portions 42, 44 and 52, 54, respectively, extend proximal of the stop faces 450, 550. The first and second intermediate portions 42, 44 and 52, 54 have the same diameter as the tip portions 46, 56.

The attachment sections 41, 51 are straight pipe portions as well that are attached over their length to the top face 101, whereby the first and second connecting nipples 4, 5 are attached to the base body 10.

The first and second connecting nipples 4, 5 have each a longitudinal nipple axis, the first and second longitudinal nipple axes 48, 58, respectively (*cf.* Fig. 2). The first and second longitudinal nipple axes 48, 58 form a V shape with an opening angle from 50 degrees to 70 degrees, *e.g.* 60 degrees. The first and second longitudinal axes 48, 58 span a first plane P₁ that extends parallel and at distance to the top face 100.

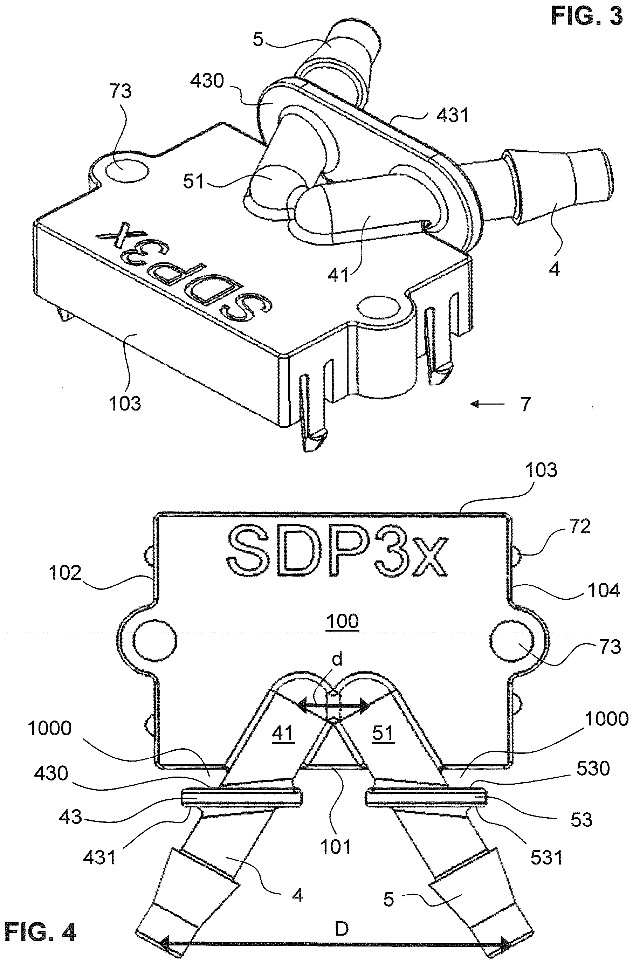

The first and second connecting nipples 4, 5 have identical lengths (about the same as the first distance D or somewhat less) and also identical cross-sections. The first and second muzzle openings 47, 57 are spaced apart from one another by a second distance D. The first and second attachment portions 41, 51 receive at their proximal ends the first and second receptions 2, 3, respectively. The first distance d between the first and second receptions 2, 3 are shown in Fig. 2 (and Fig. 4 for the second embodiment, see below). The first distance d is about 6-times smaller than the second distance D. The second distance D may be 3 centimeters to 6 centimeters.

The single abutment plate 438 is arranged between the first and second intermediate portions 42, 44 and 52, 54, respectively, connecting the first and second connecting nipples 4, 5 to one another. The abutment plate 438 extends parallel to the front face 101. The longitudinal nipple axes 48, 58 intersect the abutment plate 438 and extend angular to the plane defined by the abutment plate 438.

The abutment plate 438 is an elongated shield with rounded short edges that acts as a stop for hose parts pushed over the sealing rings 45, 55. For that purpose, a distal face 431 is provided on the abutment plate 438. As can be seen from the Figures, the distal face 431 extends parallel to the front face 101 of the base body 10.

Moreover, due to the extension first intermediate section 42, 52, a gap 1000 is created between a proximal face 430 of the abutment plate 438 and the front face 101 of the base body 10. This gap 1000 may be used for receiving a wall structure of, for example, a housing of the unit comprising the adaptor device 1 and the differential pressure sensor package 8 on the printed circuit board to which the package 8 is attached to. Thereby, the connecting nipples 4, 5 engage through the abutment plate 438 in a partial positive locking with the further wall structure whilst being usable from the exterior of the further wall structure.

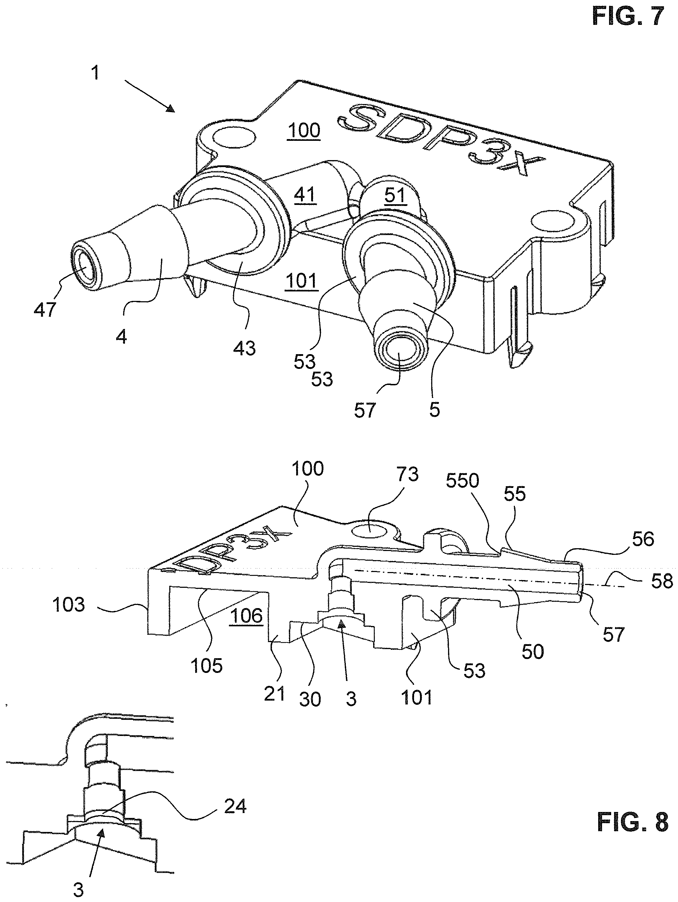

The first and second receptions 2, 3 are now explained in more detail with further reference to **Figures 8** and **9**. Figure 8 shows a detail of a cross-section (front to back) of the adaptor device 1. Figure 9 shows a second cross-section (side to side) through the second reception 3. The first reception 2 has the same design.

The first and second receptions 2, 3 have longitudinal reception axes 23, 33 that span a second plane P₂. The second plane P₂ extends parallel to the front face 101. Accordingly, the second plane P₂ intersects with the first plane P₁ at a 90 degrees angle, wherein the intersection line is parallel to both the top and the front faces 100, 101.

The first and second receptions 2, 3 are through-holes through the top wall, connecting the bottom cavity 106 to the passage portions in the attachment portions 41, 51. In the region of the receptions 2, 3, the top wall is thicker such as to allow a proper stepping of the receptions 2, 3 (*cf.* Fig. 8). The receptions 2, 3 have horizontal several steps. A first cylindrical opening portion of the receptions 2, 3, as seen from the bottom side, has a first diameter. The joining second opening portion has a reduced second diameter, and the joining third opening portion that extends into the respective attachments portion 41, 51 has a third diameter that is smaller than the second diameter. The diameter stepping of the receptions 2, 3 allows for sealing elements 24 (*cf.* detail to the left of Fig. 8) to be inserted, wherein the ring-like sealing elements 24 abut against a stop surface created by the steps. The first and second coupling nozzles 81, 82 then butt against the sealing elements 24 and are received in a positive locking manner in radial direction.

The first and second passages 40, 50 extend separately from one another through the stepped receptions 2, 3 into the first and second connecting nipples 4, 5 and therethrough to the first and second muzzle openings 47, 57, respectively.

The adaptor device 1 further has a first fastening structure 7 that comprises four snap-in tongues 71. The snap-in tongues carry, on their free end portions, outward facing snap-in noses 72. The snap-in tongues 71 are elastic members for establishing a quick-release connection to the differential pressure sensor package 8. The package 8 is mounted on a printed circuit board 84 (*cf.* Fig. 10), the latter being provided with a second fastening structure. The second fastening structure is a set of openings 840 for receiving portions of the snap-in tongues 71 such that the snap-in noses 72 extend into the printed circuits board 84 and engage with appropriate stop faces provided in the openings 840. As can be seen from the Figures, the four snap-in tongues 71 are arranged in corner regions of the bottom face 105. The tongues 71 are prolonged into the side walls of the base body 10 by lateral slots 710. The Figures also show that the tongues 71 protrude beyond the bottom edge of the side walls such that the snap-in noses 72 may be inserted into the above-mentioned openings 840 in the printed circuit board 84.

For further securing the adaptor device 1 to the printed circuit board 84, two lateral through-openings 73 are provided in the base body 10. The through-openings 73 are delimited by hollow cylinders that are arranged to intersect the side walls of the base body 10. Moreover, the hollow cylinders are arranged between a pair of snap-in tongues 71. Furthermore, the hollow cylinders protrude perpendicularly to and from the bottom face 105 and laterally beyond the side walls of the base body 10 such that a part cylindrical outward-facing protrusion is evident on the side walls. Moreover, the hollow cylinders are reinforced by stiffening walls 730 arranged in the cavity 106 as shown, for example, in Fig. 2.

In the cavity 106 is arranged a reception structure 21 with two side walls 211 and one rear wall 212. The reception structure 21 together with an intermediate portion of the front wall 101 form another box-like structure, delimiting a substantially cuboidal sub-cavity 22 within the cavity 106. The sub-cavity 22 is also open to the bottom.

In the sub-cavity 22, the first and second receptions 2, 3 are arranged.

**Figures 4** to **7** show a second embodiment of the adaptor device 1 according to invention. The same features are designated with the same numerals. The second embodiment differs from the above-described first embodiment in the design of the abutment 438 and 43, 53, respectively. According to the second embodiment, the abutment consists of two separate elongated abutment rings 43, 53. The abutment rings 43, 53 have the same orientation and arrangement as the abutment plate 438 and are also designed to form a gap 1000 for receiving the further wall structure as explained in the context of the first embodiment.

**Figure 10** shows the conventional pressure sensor package 8 arranged on the printed circuit board 84. The package 8 comprises a basic body 83 with the first and second coupling nozzles 81, 82. The first and second coupling nozzles 81, 82 are the pneumatic ports receiving the fluid pressure to be measured by means of the sensor. As can be seen, the shape of the sub-cavity 22 is chosen such that the package 8 with its body 83 and nozzles 81, 82 properly fit thereinto, *i.e.* the outer shape of the package 8 and the shape of the sub-cavity 22 correspond to one another.

**LIST OF REFERENCE SIGNS**

| | | | |
|---|---|---|---|
| 1 | adaptor device | 431 | distal face of 43 |
| | | 44 | second intermediate portion of 4 |
| 10 | base body | 45 | sealing ring of 4 |
| 100 | top face of 10 | 450 | locking face of 45 |
| 101 | front face of 10 | 46 | tip portion of 4 |
| 102 | first side face of 10 | 460 | proximal end of 46 |
| 103 | rear face of 10 | 461 | distal edge of 46 |
| 104 | second side face of 10 | 47 | muzzle opening of 4 |
| 105 | bottom face of 10 | 48 | first longitudinal axis of 4 |
| 106 | bottom cavity of 10 | | |
| | | 5 | second connecting nipple |
| 1000 | gap | 50 | second passage in 5 |
| | | 51 | attachment portion of 5 |
| 2 | first reception | 52 | first intermediate portion of 5 |
| 20 | first abutment | 53 | abutment ring of 5 |
| 21 | reception structure | 530 | proximal face of 53 |
| 22 | sub-cavity within 106 | 531 | distal face of 53 |
| 23 | longitudinal axis of 2 | 54 | second intermediate portion of 5 |
| 24 | ring-like sealing element | 55 | sealing ring of 5 |
| 3 | second reception | 550 | locking face of 55 |
| 30 | second abutment | 56 | tip portion of 5 |
| 33 | longitudinal axis of 3 | 560 | proximal end of 56 |
| | | 561 | distal edge of 56 |
| 4 | first connecting nipple | 57 | muzzle opening of 5 |
| 40 | first passage in 4 | 58 | second longitudinal axis of 5 |
| 41 | attachment portion of 4 | | |
| 42 | first intermediate portion of 4 | 7 | first fastening structure |
| 43 | abutment ring of 4 | | |
| 438 | abutment plate | | |
| 430 | proximal face of 43 | | |
| 71 | snap-in tongue | 83 | base body of 8 |
| 710 | slot | 84 | printed circuit board |
| 72 | snap-in nose | 840 | opening in 84 for receiving 72 |
| 73 | through-hole | | |
| 730 | stiffening rib or wall | d | first distance between 2, 3 |
| | | D | second distance between 47, 57 |
| 8 | differential pressure sensor package | | |
| 81 | fist coupling nozzle of 8 | | |
| 82 | second coupling nozzle of 8 | | |

## Claims

1. A differential pressure sensor comprising:
a differential pressure sensor package (8) comprising a first hose coupling nozzle (81) and a second hose coupling nozzle (82),
wherein the differential pressure sensor comprises an adaptor device (1) comprising:
a base body (10), the base body (10) comprising a first reception (2) for receiving the first hose coupling nozzle (81) and a second reception (3) for receiving the second hose coupling nozzle (82), wherein the first and second receptions (2,3) are spaced apart from one another by a first distance (d);
a first connecting nipple (4) for receiving a first hose, the first connecting nipple (4) having a first muzzle opening (47) and being attached to the base body (10) and connected to the first reception (2) by a first passage (40); and
a second connecting nipple (5) for receiving a second hose, the second connecting nipple (5) having a second muzzle opening (57) and being attached to the base body (10) and connected to the second reception (3) by a second passage (50), wherein the first and second muzzle openings (47,57) are spaced apart at a second distance (D), wherein the second distance (D) is longer than the first distance (d);
wherein the adaptor device (1) is configured to be connected to the differential pressure sensor package (8), and wherein the adaptor device (1) is further configured to receive, upon connection with the differential pressure sensor package (8), the first and second hose coupling nozzles (81,82) in the first and second receptions (2,3), respectively.

2. The differential pressure sensor according to claim 1, wherein the second distance (D) is at least 30% longer, more preferably at least 50% longer, more preferably at least 100% longer, most preferably 5-times to 7-times longer than the first distance (d), and/or wherein the first distance (d) is smaller than 15 millimeters, preferably smaller than 10 millimeters, most preferably less than or equal to 5 millimeters.

3. The differential pressure sensor of claim 1 or 2, wherein the base body has a cavity (106), and wherein the first and second receptions (2,3) are arranged in the cavity (106).

4. The differential pressure sensor according to any one of claims 1 to 3, wherein the base body (10) has a part or complete cuboidal shape with cuboid faces (100-105); wherein the first and second connecting nipples (4,5) are arranged on the same first cuboid face (100) of the cuboid faces (100-105); and
wherein the first and second receptions (2,3) are arranged on the same second cuboid face (101) of the cuboid faces (100-105), the first cuboid face (100) being different from the second cuboid face (101).

5. The differential pressure sensor according to claim 4, wherein the first and second connecting nipples (4,5) have first and second longitudinal nipple axes (48,58), respectively, wherein the first and second connecting nipples (4,5) each comprise an attachment portion (41,51), the attachment portions (41,51) being pipe portions extending along the first and second nipple axes (48,58), respectively, and being attached to the first cuboid face (100) of the base body (10), and wherein the first and second nipple axes (48,58) extend parallel to the first cuboid face (100).

6. The differential pressure sensor according to any one of the preceding claims, wherein the first and second connecting nipples (4,5) have first and second longitudinal nipple axes (48,58), respectively, and wherein the first and second longitudinal nipple axes (48,58) are straight and extend in an inclined manner with respect to one another, preferably in a V shape.

7. The differential pressure sensor according to claim 6,
wherein the first and second longitudinal nipple axes (48,58) span a first plane (P₁),
wherein the first and second receptions (2,3) have first and second longitudinal reception axes (23,33), respectively, wherein the first and second longitudinal reception axes (23,33) extend parallel to one another and span a second plane (P₂),
wherein the first plane (P₁) and the second plane (P₂) intersect one another, wherein an intersection angle between the first plane (P₁) and the second plane (P₂) ranges between 45 degrees to 165 degrees.

8. The differential pressure sensor according to any one of the preceding claims, wherein the first and second receptions (2,3) have, on their depth, a sealing element (24) for forming a fluid tight connection with the first and second hose coupling nozzles (81,82); or
wherein the first and second receptions (2,3) have first and second longitudinal reception axes (23,33), respectively, wherein the first and second longitudinal reception axes (23,33) extend parallel to one another and are preferably straight.

9. The differential pressure sensor according to claim 4 in combination with claim 6, wherein the first and second receptions (2,3) have first and second longitudinal reception axes (23,33), respectively, wherein the first and second longitudinal reception axes (23,33) extend parallel to one another and span a second plane (P₂), and wherein the second plane (P₂) is parallel to the second cuboid face (101) of the base body (10).

10. The differential pressure sensor according to any one of the preceding claims, wherein the first and second connecting nipples (4,5) are provided with an abutment (438; 43,53), the abutment (438; 43,53) having at least one proximal face (430,530) and at least one distal face (431,531), wherein the first and second longitudinal nipple axes (48,58) intersect with the at least one proximal and distal faces (430,431,530,531), and wherein the abutment is preferably elongated in a direction of the second distance (D).

11. The differential pressure sensor according to claim 10, wherein the abutment (43,53) comprises at least two abutment rings (43,53), wherein on each of the first and second connecting nipples (4,5) is arranged at least one abutment ring (43,53), the abutment rings (43,53) being preferably plate-like and at least in part or completely round, preferably circular or elliptical, or having a polygonal shape.

12. The differential pressure sensor according to claim 4 in combination with at least one of claims 10 and 11, wherein the proximal and distal faces (430,431,530,531) of the abutment (43,53) extend parallel to one of the cuboid faces (100-105) of the base body (10), and wherein the proximal face (430,530) is arranged at a distance to the one of the cuboid faces (100-105) such that a gap (1000) is formed between the second cuboid face (101) and the proximal face (530) for receiving portions of a further wall structure.

13. The differential pressure sensor according to claim 3, preferably in combination with at least one of claims 2 and 4 to 12, wherein a reception structure (21) is arranged in the cavity (106) around the first and second receptions (2,3), the reception structure (21) forming a sub-cavity (22) for receiving the differential pressure sensor package (8) with the first and second coupling nozzles (81,82).

14. The differential pressure sensor according to any one of the preceding claims, comprising at least one first fastening structure (7) for connecting the adaptor device (1) to the differential pressure sensor package (8), in particular to a circuit board (84) of the differential pressure sensor package (8).

15. The differential pressure sensor according to claim 14, wherein the at least one first fastening structure (7) comprises at least one, preferably a plurality of snap-in tongues (71) with a snap-in nose (72) and/or at least one through-hole (73) through the base body (10) for connecting the adaptor device (1) to the differential pressure sensor package (8).

## Patentansprüche

1. Differenzdrucksensor, aufweisend:
eine Differenzdrucksensorbaugruppe (8), die ein erstes Schlauchanschlussmundstück (81) und ein zweites Schlauchanschlussmundstück (82) aufweist,
wobei der Differenzdrucksensor eine Adaptervorrichtung (1) umfasst, welche aufweist:
einen Grundkörper (10), wobei der Grundkörper eine erste Aufnahme (2) zum Aufnehmen des ersten Schlauchanschlussmundstücks (81) und eine zweite Aufnahme (3) zum Aufnehmen des zweiten Schlauchanschlussmundstücks (82) aufweist, wobei die ersten und zweiten Aufnahmen (2, 3) voneinander um einen ersten Abstand (d) beabstandet sind;
einen ersten Verbindungsstutzen (4) zum Empfangen eines ersten Schlauchs, wobei der erste Verbindungsstutzen (4) eine erste Mündungsöffnung (47) aufweist und am Grundkörper (10) angebracht ist und mit der ersten Aufnahme (2) durch einen ersten Durchlass (40) verbunden ist; und
einen zweiten Verbindungsstutzen (5) zum Empfangen eines zweiten Schlauchs, wobei der zweite Verbindungsstutzen (5) eine zweite Mündungsöffnung (57) aufweist und am Grundkörper (10) angebracht ist und mit der zweiten Aufnahme (3) durch einen zweiten Durchlass (50) verbunden ist, wobei die ersten und zweiten Mündungsöffnungen (47, 57) um einen zweiten Abstand (D) voneinander beanstandet sind, wobei der zweite Abstand (D) grösser als der erste Abstand (d) ist;
wobei die Adaptervorrichtung (1) dazu ausgebildet ist, mit der Differenzdrucksensorbaugruppe (8) verbunden zu werden, und wobei die Adaptervorrichtung (1) ausserdem dazu ausgebildet ist, bei einer Verbindung mit der Differenzdrucksensorbaugruppe (8) die ersten und zweiten Schlauchanschlussmundstücke (81, 82) in der ersten bzw. zweiten Aufnahme (2, 3) aufzunehmen.

2. Differenzdrucksensor nach Anspruch 1, wobei der zweite Abstand (D) mindestens 30% grösser, stärker bevorzugt mindestens 50% grösser, stärker bevorzugt mindestens 100% grösser, besonders bevorzugt 5 mal bis 7 mal grösser als der erste Abstand (d) ist, und/oder wobei der erste Abstand (d) kleiner als 15 mm, vorzugsweise kleiner als 10 mm, besonders bevorzugt kleiner oder gleich 5 mm ist.

3. Differenzdrucksensor nach Anspruch 1 oder 2, wobei der Grundkörper einen Hohlraum (106) aufweist, und wobei die ersten und zweiten Aufnahmen (2, 3) in dem Hohlraum (106) angeordnet sind.

4. Differenzdrucksensor nach einem der Ansprüche 1 bis 3, wobei der Grundkörper (10) teilweise oder vollständig quaderförmig mit Quaderseiten (100-105) ist;
wobei die ersten und zweiten Verbindungsstutzen (4, 5) auf derselben ersten Quaderseite (100) der Quaderseiten (100-105) angeordnet sind; und
wobei die ersten und zweiten Aufnahmen (2, 3) auf derselben zweiten Quaderseite (101) der Quaderseiten (100-105) angeordnet sind, wobei sich die erste Quaderseite (100) von der zweiten Quaderseite (101) unterscheidet.

5. Differenzdrucksensor nach Anspruch 4, wobei die ersten und zweiten Verbindungsstutzen (4, 5) erste und zweite Stutzenlängsachsen (48, 58) aufweisen, wobei jeder der ersten und zweiten Verbindungsstutzen (4, 5) einen Verbindungsabschnitt (41, 51) aufweist, wobei die Verbindungsabschnitte (41, 51) Rohrabschnitte sind, die entlang der ersten bzw. zweiten Stutzenlängsachsen (48, 58) verlaufen und an der ersten Quaderseite (100) des Grundkörpers (10) angebracht sind, und wobei sich die ersten und zweiten Stutzenlängsachsen (48, 58) parallel zur ersten Quaderseite (100) erstrecken.

6. Differenzdrucksensor nach einem der vorhergehenden Ansprüche, wobei die ersten und zweiten Verbindungsstutzen (4, 5) erste und zweite Stutzenlängsachsen (48, 58) aufweisen, und wobei die ersten und zweiten Stutzenlängsachsen (48, 58) gerade verlaufen und sich in einer zueinander geneigten Weise erstrecken, vorzugsweise in einer V-Form.

7. Differenzdrucksensor nach Anspruch 6,
wobei die ersten und zweiten Stutzenlängsachsen (48, 58) eine erste Ebene (P₁) aufspannen,
wobei die ersten und zweiten Aufnahmen (2, 3) ein erste und zweite Aufhahmelängsachsen (23, 33) haben, wobei sich die ersten und zweiten Aufhahmelängsachsen (23, 33) parallel zueinander erstrecken und eine zweite Ebene (P2) aufspannen,
wobei die erste Ebene (P₁) und die zweite Ebene (P₂) einander schneiden, wobei ein Schnittwinkel zwischen der ersten Ebene (P₁) und der zweiten Ebene (P₂) zwischen 45° und 165° liegt.

8. Differenzdrucksensor nach einem der vorhergehenden Ansprüche,
wobei die ersten und zweiten Aufnahmen (2, 3) in ihrer Tiefe ein Dichtelement (24) aufweisen, um eine fluiddichte Verbindung mit den ersten und zweiten Schlauchanschlussmundstücken (81, 82) herzustellen; oder
wobei die ersten und zweiten Aufnahmen (2, 3) erste und zweite Aufnahmelängsachsen (23, 33) haben, wobei die ersten und zweiten Aufnahmelängsachsen (23, 33) sich parallel zueinander erstrecken und vorzugsweise gerade sind.

9. Differenzdrucksensor nach Anspruch 4 in Kombination mit Anspruch 6, wobei die ersten und zweiten Aufnahmen (2, 3) erste und zweite Aufhahmelängsachsen (23, 33) haben, wobei die ersten und zweiten Aufhahmelängsachsen (23, 33) sich parallel zueinander erstrecken und eine zweite Ebene (P₂) aufspannen, und wobei die zweite Ebene (P₂) parallel zur zweiten Quaderseite (101) des Grundkörpers (10) verläuft.

10. Differenzdrucksensor nach einem der vorhergehenden Ansprüche, wobei die ersten und zweiten Verbindungsstutzen (4, 5) mit einem Anschlag (438; 43, 53) versehen sind, wobei der Anschlag (438; 43, 53) mindestens eine proximale Stirnfläche (430, 530) und mindestens eine distale Stirnfläche (431, 531) aufweist, wobei die ersten und zweiten Stutzenlängsachsen (48, 58) die mindestens einen proximalen und distalen Stirnflächen (430, 431, 530, 531) schneiden, und wobei der Anschlag vorzugsweise in Richtung des zweiten Abstands (D) gestreckt ist.

11. Differenzdrucksensor nach Anspruch 10, wobei der Anschlag (43, 53) mindestens zwei Anschlagringe (43, 53) aufweist, wobei an jedem der ersten und zweiten Verbindungsstutzen (4, 5) mindestens ein Anschlagring (43, 53) angeordnet ist, wobei die Anschlagringe (43, 53) vorzugsweise scheibenartig und mindestens teilweise oder vollständig rund, vorzugsweise kreisrund oder elliptisch, sind oder eine polygonale Form aufweisen.

12. Differenzdrucksensor nach Anspruch 4 in Kombination mit mindestens einem der Ansprüche 10 und 11, wobei sich die proximalen und distalen Stirnflächen (430, 431, 530, 531) des Anschlags (43, 53) parallel zu einer der Quaderseiten (100-105) des Grundkörpers (10) erstrecken, und wobei die proximale Stirnfläche (430, 530) in beabstandet zu dieser Quaderseite (100-105) angeordnet ist, sodass eine Lücke (1000) zwischen der zweiten Quaderseite (101) und der proximalen Stirnfläche (530) ausgebildet ist, um Bereiche einer weiteren Wandstruktur aufzunehmen.

13. Differenzdrucksensor nach Anspruch 3, vorzugsweise in Kombination mit mindestens einem der Ansprüche 2 und 4 bis 12, wobei im Hohlraum (106) um die ersten und zweiten Aufnahmen (2, 3) herum eine Aufnahmestruktur (21) angeordnet ist, wobei die Aufnahmestruktur (21) einen Unterhohlraum (22) bildet, um die Differenzdrucksensorbaugruppe (8) mit den ersten und zweiten Schlauchanschlussmundstücken (81, 82) aufzunehmen.

14. Differenzdrucksensor nach einem der vorhergehenden Ansprüche, welcher mindestens eine erste Befestigungsstruktur (7) aufweist, um die Adaptervorrichtung (1) mit der Differenzdrucksensorbaugruppe (8) zu verbinden, insbesondere mit einer Platine (84) der Differenzdrucksensorbaugruppe (8).

15. Differenzdrucksensor nach Anspruch 14, wobei die mindestens eine erste Befestigungsstruktur (7) mindestens eine, vorzugsweise eine Mehrzahl von Schnappzungen (71) mit eine Schnappnase (72) und/oder mindestens ein Durchgangsloch (73) durch den Grundkörper (10) aufweist, um die Adaptervorrichtung (1) mit der Differenzdrucksensorbaugruppe (8) zu verbinden.

## Revendications

1. Un capteur de pression différentielle, comprenant:
un montage de capteur de pression différentielle (8), présentant une première buse de raccord de tuyau (81) et une seconde buse de raccord de tuyau (82),
où le capteur de pression différentielle comprend un dispositif adaptateur (1) lequel comprend:
un corps de base (10), le corps de base (10) présentant une première réception (2) destinée à recevoir la première buse de raccord de tuyau (81) et une seconde réception (3) destinée à recevoir la seconde buse de raccord de tuyau (82), dans lequel la première et la seconde réception (2, 3) sont espacées l'une de l'autre d'une première distance (d);
un premier raccord (4) destiné à recevoir un premier tuyau, le premier raccord (4) présentant une première ouverture de bouche (47) et étant fixé au corps de base (10) et relié à la première réception (2) par un premier passage (40); et
un deuxième raccord (5) destiné à recevoir un deuxième tuyau, le deuxième raccord (5) ayant une deuxième ouverture de bouche (57) et étant fixé au corps de base (10) et relié à la deuxième réception (3) par un second passage (50), dans lequel la première et la seconde ouverture de bouche (47, 57) sont espacées d'une seconde distance (D); où la seconde distance (D) est supérieure à la première distance (d);
dans lequel le dispositif adaptateur (1) est configuré pour être connecté à un autre montage de capteur de pression différentielle (8), et dans lequel le dispositif adaptateur (1) est en outre configuré pour recevoir, lors de la connexion avec l'autre montage de capteur de pression différentielle (8), la première et la seconde buse de raccord de tuyau (81, 82) dans la première et la seconde réception (2, 3), respectivement.

2. Le capteur de pression différentielle selon la revendication 1, dans lequel la seconde distance (D) est au moins 30% supérieure, plus préférablement au moins 50% supérieure, plus préférablement au moins 100% supérieure, le plus préférablement 5 à 7 fois supérieure à la première distance (d) et / ou où la première distance (d) est inférieure à 15 mm, préférablement inférieure à 10 mm, plus préférablement inférieure à 5 mm.

3. Le capteur de pression différentielle selon la revendication 1 ou 2, dans lequel le corps de base comporte une cavité (106), et dans lequel la première et la seconde réception (2, 3) sont disposées dans la cavité (106).

4. Le capteur de pression différentielle selon l'une quelconque des revendications 1 à 3, dans lequel le corps de base (10) présente une forme partiellement ou complètement cuboïde avec des faces cuboïdes (100 à 105);
dans lequel le premier et le second raccord (4, 5) sont disposés sur la même première surface cuboïde (101) des faces cuboïdes (100 à 105), et
dans lequel la première et seconde réception (2, 3) sont disposées sur la même seconde surface cuboïde (101) des faces cuboïdes (100 à 105), la première face cuboïde (100) étant différente à la seconde face cuboïde (101).

5. Le capteur de pression différentielle selon la revendication 4, dans lequel le premier et le second raccord (4, 5) présentent un premier et un second axe de raccord longitudinal (48, 58), respectivement, dans lequel le premier et le second raccord (4, 5) comprennent chacun une partie de fixation (41, 51), les parties de fixation (41, 51) étant des parties de tuyaux s'étendant le long du premier et du second axe de raccord (48, 58), respectivement, et étant fixé à la première face cuboïde (100) du corps de base (10), et dans lequel le premier et le second axe de raccord (48, 58) s'étendent en parallèle à la première face cuboïde (100).

6. Le capteur de pression différentielle selon l'une quelconque des revendications précédentes, dans lequel le premier et second raccord (4, 5) présentent un premier et un second axe de raccord longitudinal (48, 58), respectivement, et dans lequel le premier et le second axe de raccord longitudinal (48, 58) sont rectilignes et s'étendent de manière inclinée l'un par rapport à l'autre, préférablement en forme de V.

7. Le capteur de pression différentielle selon la revendication 6, dans lequel le premier et le second axe de raccord longitudinal (48, 58) définissent un premier plan (P1), dans lequel la première et la seconde réception (2, 3) comportent un premier et un second axe de réception longitudinal (23, 33), respectivement, dans lequel le premier et le second axe de réception longitudinal (23, 33) s'étendent en parallèle un par rapport à l'autre et définissent un second plan (P2),
dans lequel le premier plan (P1) et le second plan (P2) intersectent l'un à l'autre, dans lequel une angle d'intersection entre le premier plan (P1) et le second plan (P2) se situe dans la plage de 45° à 165°.

8. Le capteur de pression différentielle selon l'une quelconque des revendications précédentes, dans lequel la première et la seconde réception (2, 3) ont, sur leur fond, un élément d'étanchéité (24) pour former une connexion étanche au fluide avec la première et la seconde buse de raccord de tuyaux (81, 82); et
dans lequel la première et la seconde réception (2, 3) comportent un premier et un second axe de réception longitudinal (23, 33), respectivement, dans lequel le premier et le second axe de réception longitudinal (23, 33) s'étendent en parallèle l'un par rapport à l'autre et sont préférablement rectilignes.

9. Le capteur de pression différentielle selon la revendication 4 en combinaison avec la revendication 6, dans lequel la première et la seconde réception (2, 3) comportent un premier et un second axe de réception longitudinal (23, 33), respectivement, dans lequel le premier et le second axe de réception longitudinal (23, 33) s'étendent en parallèle l'un par rapport à l'autre et définissent un second plan (P2), et dans lequel le second plan (P2) est parallèle à la seconde face cuboïde (101) du corps de base (10).

10. Le capteur de pression différentielle selon l'une quelconque des revendications précédentes, dans lequel le premier et second raccord (4, 5) comportent une butée (438; 43, 53), la butée (438; 51, 53) ayant au moins une face proximale (430, 530) et au moins une face distale (431, 531), dans lequel le premier et le second axe de raccord longitudinal (48, 58) intersectent avec l'au moins une face proximale et une face distale (430, 431, 530, 531), et dans lequel la butée est préférablement allongée en direction de la seconde distance (D).

11. Le capteur de pression différentielle selon la revendication 10, dans lequel la butée (43, 53) comprend au moins deux anneaux de butée (43, 53), où sur chacun du premier et second raccord (4, 5) au moins un anneau de butée (43, 53) est disposée, les anneaux de butée (43, 53) étant préférablement de type plaque et au moins partiellement ou complètement ronds, préférablement circulaires ou elliptiques, ou ayant une forme polygonale.

12. Le capteur de pression différentielle selon la revendication 4 en combinaison avec au moins une des revendications 10 et 11, dans lequel les faces proximales et distales (430, 431, 530, 531) de la butée (43, 53) s'étendent en parallèle à une des faces cuboïdes (100 à 105) du corps de base (10), et dans lequel la face proximale (430, 530) est disposée à une distance d'une des faces cuboïdes (100 à 105) de sorte que un écart (1000) est formé entre la seconde face cuboïde (101) et la face proximale (530) pour recevoir des parties d'une structure de paroi supplémentaire.

13. Le capteur de pression différentielle selon la revendication 3, préférablement en combinaison avec au moins une des revendications 2 et 4 à 12, dans lequel une structure de réception (21) est disposée dans la cavité (106) autour de la première et la seconde réception (2, 3), la structure de réception (21) formant une sous-cavité (22) destinée à recevoir le montage de capteur de pression différentielle (8) avec la première et la seconde buse de raccord (81, 82).

14. Le capteur de pression différentielle selon l'une quelconque des revendications précédentes, comprenant au moins une première structure de fixation (7) pour relier le dispositif adaptateur (1) au montage de capteur de pression différentielle (8), en particulier à un circuit imprimé (84) du montage de capteur de pression différentielle (8).

15. Le capteur de pression différentielle selon la revendication 14, dans lequel au moins une première structure de fixation (7) comprend au moins une, préférablement une pluralité de languettes à encliquetage (71) avec un nez d'encliquetage (72) et/ou au moins une perforation (73) à travers le corps de base (10) pour relier le dispositif adaptateur (1) au montage de capteur de pression différentielle (8).
